# EUROPEAN PATENT APPLICATION

(11) **EP 4 730 138 A1**
(43) Date of publication of application: **22.04.2026**
(21) Application number: 24909966.4
(22) Date of filing: 04.09.2024
(51) Int. Cl.: G06F 11/36

(54) **PROGRAM DEBUGGING DEVICE, PROGRAM DEBUGGING METHOD, AND PROGRAM DEVELOPMENT PRODUCT**

(30) Priority: 29.12.2023 CN 202311869885
(71) Applicant: Huawei Technologies Co., Ltd., Shenzhen, Guangdong 518129 (CN)
(72) Inventor: ZENG, Tian, Shenzhen, Guangdong 518129 (CN); XU, Sihao, Shenzhen, Guangdong 518129 (CN)
(74) Representative: Pfenning, Meinig & Partner mbB
(86) International application number: PCT/CN2024/116833
(87) International publication number: WO 2025/139020

(57) **Abstract**

This application relates to the field of program debugging technologies, and provides a program debugging apparatus, a program debugging method, and a program development product. The program debugging method includes: in response to a first debugging operation for a target program, debugging the target program to pass a first target code position in a first code file corresponding to the target program; and displaying at least a first timeline and a second timeline that correspond to the first target code position, where the first timeline corresponds to a first thread that runs the target program, and the second timeline corresponds to a second thread that runs the target program. When a program relates to multi-thread concurrent execution, a program debugging process is displayed in two manners: timeline-based display of threads corresponding to a plurality of timelines, for example, at least the first timeline and the second timeline, in combination with a breakpoint on a timeline and code line information of the breakpoint. This improves visual effect of a debugging function of an integrated development environment and efficiency of locating, by a developer, an exception or a problem in code.

## Description

This application claims priority to Chinese Patent Application 202311869885.4, filed with the China National Intellectual Property Administration on December 29, 2023 and entitled "PROGRAM DEBUGGING APPARATUS, PROGRAM DEBUGGING METHOD, AND PROGRAM DEVELOPMENT PRODUCT", which is incorporated herein by reference in its entirety.

### TECHNICAL FIELD

Embodiments of this application relate to the field of program debugging technologies, and specifically, to a program debugging apparatus, a program debugging method, and a program development product.

### BACKGROUND

During development of a program, a developer debugs code after writing the code, and a defect of the code may be found through debugging. Breakpoint debugging is a debugging technology in which execution is suspended during debugging of the program and the developer is allowed to check the code corresponding to the program in a stepwise manner. The developer may set a keypoint (namely, a breakpoint) in the code of the program through an integrated development environment (Integrated Development Environment, IDE). When the program is debugged or run to pass code at the keypoint, execution is suspended. During the suspension, the developer may view debugging information (for example, a variable value of a to-be observed variable and stack information) corresponding to the code. The debugging information helps the developer understand a defect of code executed before the keypoint. However, if the code in which the keypoint is set relates to a multi-thread concurrent execution scenario, when the program is debugged to pass the code at the keypoint, a specific thread corresponding to a to-be-observed variable cannot be distinguished. Therefore, it is difficult to debug the program for which the keypoint is set.

### SUMMARY

This application provides a program debugging apparatus, a program debugging method, and a program development product.

According to a first aspect, this application provides a program debugging method, applied to an integrated development environment. The method includes:
in response to a first debugging operation for a target program, debugging the target program to pass a first target code position in a first code file corresponding to the target program; and displaying at least a first timeline and a second timeline that correspond to the first target code position, where the first timeline corresponds to a first thread that runs the target program, and the second timeline corresponds to a second thread that runs the target program.

In this specification, the integrated development environment herein may be a tool used by a developer or a tester to develop or debug the target program. The target program herein may be referred to as a program, a to-be-debugged program, or a program under debugging. The first debugging operation is a debugging operation performed by the developer for the target program after the developer opens code of the target program by using the integrated development environment. The target program may correspond to at least the first code file. The first target code position herein may be a code line in the first code file. For example, the first target code position may be a code line, in the first code file, in which a second-type keypoint is set. During debugging for multi-thread concurrent execution of the target program, the integrated development environment may start at least the first thread, the second thread, the first timeline, and the second timeline, and display, in a debugging area of the integrated development environment, the first timeline corresponding to the first thread and the second timeline corresponding to the second thread. At least one first breakpoint and first code line information corresponding to the first breakpoint may be displayed on the first timeline, at least one second breakpoint and second code line information corresponding to the second breakpoint may be displayed on the second timeline, and the first breakpoint and the second breakpoint correspond to code positions before the first target code position in the first code file. To be specific, the first breakpoint and the second breakpoint may be code lines, in the first code file, in which first-type keypoints are set, and the code lines corresponding to the first breakpoint and the second breakpoint are located before the code line corresponding to the first target code position.

According to the foregoing program debugging method, when a program relates to multi-thread concurrent execution, a program debugging process is displayed in two manners: timeline-based display of threads corresponding to a plurality of timelines, for example, at least the first timeline and the second timeline, in combination with a breakpoint on a timeline and code line information of the breakpoint. This enhances efficiency of performing program debugging by using the integrated development environment, improves visual effect of a debugging function of the integrated development environment in a multithreading scenario, and improves efficiency of locating, by the developer, an exception or a problem in code.

In a possible implementation of the first aspect, the first timeline includes at least one first breakpoint and first code line information corresponding to the first breakpoint, the second timeline includes at least one second breakpoint and second code line information corresponding to the second breakpoint, and the first breakpoint and the second breakpoint correspond to code positions before the first target code position in the first code file.

In this specification, the at least one first breakpoint and the first code line information corresponding to the first breakpoint may be displayed on the first timeline, the at least one second breakpoint and the second code line information corresponding to the second breakpoint may be displayed on the second timeline, and the first breakpoint and the second breakpoint correspond to the code positions before the first target code position in the first code file.

It can be learned that, when the first thread and the second thread run the target program to pass the first target code position, both a breakpoint before the first target code position and code line information corresponding to the breakpoint are displayed on a timeline, so that the developer can observe, based on code lines at keypoints during debugging, debugging information corresponding to different keypoints in a same thread.

In a possible implementation of the first aspect, the first breakpoint and the second breakpoint correspond to a same code line in the first code file, and the first code line information is the same as the second code line information.

In this specification, code lines in the first code file that correspond to the first breakpoint and the second breakpoint may be the same, and the first code line information and the second code line information that are displayed on the first timeline and the second timeline are also the same.

It can be learned that, because thread behaviors of different threads such as the first thread and the second thread are different, debugging information, corresponding to different threads, of a same code line also varies. When the first thread and the second thread run the target program to pass the first target code position, the first breakpoint and the second breakpoint may be respectively displayed on the first timeline and the second timeline for a same code line in the first code file, so that the developer can observe, based on code lines at keypoints during debugging, different debugging information corresponding to a same breakpoint in different threads.

In a possible implementation of the first aspect, the first breakpoint corresponds to first hit time information, the first hit time information indicates time at which the first thread runs the target program to pass the first breakpoint, the second breakpoint corresponds to second hit time information, and the second hit time information indicates time at which the second thread runs the target program to pass the second breakpoint.

It can be learned that, if the time at which the first thread runs the target program to pass the first breakpoint is different from the time at which the second thread runs the target program to pass the second breakpoint, the first hit time information corresponding to the first breakpoint is also different from the second hit time information corresponding to the second breakpoint.

In a possible implementation of the first aspect, the first timeline is parallel to the second timeline; a straight line that passes through a starting position of the first timeline and a starting position of the second timeline is perpendicular to the first timeline and is perpendicular to the second timeline; and when the first hit time information is different from the second hit time information, a straight line that passes through the first breakpoint and the second breakpoint is not parallel to the straight line that passes through the starting position of the first timeline and the starting position of the second timeline.

It can be learned that the starting position of the first timeline displayed in the debugging area of the integrated development environment may be the same as the starting position of the second timeline. To be specific, the straight line that passes through the starting position of the first timeline and the starting position of the second timeline is perpendicular to the first timeline and is perpendicular to the second timeline. When the first hit time information is different from the second hit time information, a position of the first breakpoint on the first timeline is different from a position of the second breakpoint on the second timeline. Different positions of the first breakpoint and the second breakpoint on the first timeline and the second timeline can more intuitively show the time at which the first thread runs the target program to pass the first breakpoint and the time at which the second thread runs the target program to pass the second breakpoint.

In a possible implementation of the first aspect, the first timeline includes first thread identification information, the first thread identification information corresponds to the first thread, the second timeline includes second thread identification information, and the second thread identification information corresponds to the second thread.

It can be learned that the first thread identification information herein may be a timeline identifier of the first timeline, and the second thread identification information may be a timeline identifier of the second timeline. For example, the first timeline and the second timeline may be respectively represented by a timeline 1 and a timeline 2, and the digits 1 and 2 may indicate a time sequence of starting the first thread and the second thread that correspond to the first timeline and the second timeline.

In a possible implementation of the first aspect, when the target program is debugged to pass the first target code position in the first code file corresponding to the target program, a code area of the integrated development environment switches to displaying the first code file.

It can be learned that, when the integrated development environment debugs the target program to pass the first target code position in the first code file, the code area of the integrated development environment displays the first code file. The code area of the integrated development environment can more intuitively display the first code file that is currently under debugging.

In a possible implementation of the first aspect, the method further includes: debugging the target program to pass a second target code position in the first code file corresponding to the target program; and displaying, on the first timeline, a third breakpoint and third code line information corresponding to the third breakpoint, where the third breakpoint corresponds to the second target code position.

It can be learned that, when the first thread debugs the target program to pass the second target code position in the first code file corresponding to the target program, at least one third breakpoint and third code line information corresponding to the third breakpoint may continue to be displayed on the first timeline, where a code line corresponding to the third breakpoint herein is located before a code line corresponding to the second target code position. During continuous debugging of the target program, a breakpoint corresponding to the second target code position after the first target code position is also continuously displayed on a timeline, to provide more detailed debugging information of the target program.

In a possible implementation of the first aspect, the third breakpoint corresponds to third hit time information; the third hit time information indicates time at which the first thread runs the target program to pass the third breakpoint; and when the first hit time information is different from the third hit time information, a position of the third breakpoint on the first timeline is different from the position of the first breakpoint on the first timeline.

It can be learned that the first thread runs the target program to sequentially pass the first breakpoint and the third breakpoint. Therefore, when the first hit time information is different from the third hit time information, the position of the third breakpoint on the first timeline is different from the position of the first breakpoint on the first timeline, and the position of the third breakpoint on the first timeline may be after the position of the first breakpoint on the first timeline.

In a possible implementation of the first aspect, the method further includes: in response to a second debugging operation for the target program, debugging the target program to switch from the first code file to a second code file corresponding to the target program and pass a third target code position in the second code file; and displaying, on the first timeline, at least one fourth breakpoint and fourth code line information corresponding to the fourth breakpoint, and displaying, on the second timeline, at least one fifth breakpoint and fifth code line information corresponding to the fifth breakpoint, where the fourth breakpoint and the fifth breakpoint correspond to code positions before the third target code position in the second code file.

It can be learned that the second debugging operation herein is a next debugging operation performed by the developer for the target program by using the integrated development environment. The target program may correspond to at least the first code file and the second code file. During debugging of the target program, the target program may be debugged to sequentially pass code in the first code file and code in the second code file. The third target code position herein may be a code line in the second code file. The fourth breakpoint and the fifth breakpoint may correspond to code lines that are set in the second code file, and the code lines corresponding to the fourth breakpoint and the fifth breakpoint are located before the code line corresponding to the third target code position.

In a possible implementation of the first aspect, the first code line information is hidden on the first timeline, and the second code line information is hidden on the second timeline.

It can be learned that, when the first thread and the second thread debug the target program to pass the third target code position in the second code file, the code area of the integrated development environment switches to displaying the second code file. The first code line information is hidden on the first timeline, and the second code line information is hidden on the second timeline. On the first timeline and the second timeline, only code line information of the fourth breakpoint and the fifth breakpoint that are set in the second code file currently displayed in the integrated development environment may be displayed, and code line information of the first breakpoint and the second breakpoint that are set in the non-currently-displayed first code file is not displayed. Code line information corresponding to a breakpoint that is related to the second code file and that the target program is currently run to pass can be displayed more accurately.

In a possible implementation of the first aspect, when the target program is debugged to pass the third target code position in the second code file, the code area of the integrated development environment switches to displaying the second code file.

It can be learned that, when the integrated development environment debugs the target program to pass the third target code position in the second code file, the code area of the integrated development environment displays the second code file. The code area of the integrated development environment can more intuitively display the second code file that is currently under debugging.

In a possible implementation of the first aspect, the method further includes: In response to a backtrace operation for the first breakpoint, the code area of the integrated development environment switches to displaying the first code file and displaying, in a highlighted display manner, code of the first code line information in the first code file.

It can be learned that the backtrace operation herein may be that the developer backtraces, by clicking/tapping the first breakpoint on the first timeline, debugging information of a thread behavior corresponding to the first timeline. The code area of the integrated development environment may switch to displaying the first code file and displaying code in the first code file in a highlighted manner based on the first code line information of the first breakpoint.

In a possible implementation of the first aspect, the method further includes: In response to a backtrace operation for the first breakpoint, the debugging area of the integrated development environment displays first debugging information corresponding to the first breakpoint, where the first debugging information includes at least one of the following: a variable value of a first to-be-observed variable, the first thread identification information, the first hit time information, and the first code line information.

In a possible implementation of the first aspect, on the first timeline, the first code line information is displayed, and the fourth code line information is hidden; and on the second timeline, the second code line information is displayed, and the fifth code line information is hidden.

It can be learned that, on the first timeline and the second timeline, only code line information of the first breakpoint and the second breakpoint that are set in the first code file currently displayed in the integrated development environment may be displayed, and code line information of the fourth breakpoint and the fifth breakpoint that are set in the non-currently-displayed second code file is not displayed. Code line information corresponding to a breakpoint that is related to the first code file and that the target program is currently run to pass can be displayed more accurately.

According to a second aspect, this application provides a program debugging apparatus, used in an integrated development environment.

In response to a first debugging operation for a target program, the program debugging apparatus debugs the target program to pass a first target code position in a first code file corresponding to the target program.

The program debugging apparatus displays, in a debugging area of the integrated development environment, at least a first timeline and a second timeline that correspond to the first target code position, where the first timeline corresponds to a first thread that runs the target program, and the second timeline corresponds to a second thread that runs the target program.

According to a third aspect, this application provides a computer-readable storage medium, including instructions. When the instructions are executed on an electronic device, the electronic device is enabled to perform the data processing method according to any one of the first aspect or the implementations.

For beneficial effects of the foregoing aspects, mutual reference may be made between the foregoing aspects.

### BRIEF DESCRIPTION OF DRAWINGS

FIG. 1(a) to FIG. 1(c) show an application scenario of an application interface of an integrated development environment according to an embodiment of this application;
FIG. 2 is a diagram of effect of timeline-based display of threads and effect of displaying code line information of keypoints on timelines in a program debugging method according to an embodiment of this application;
FIG. 3(a) is a diagram of effect of displaying a plurality of timelines corresponding to a plurality of threads in an integrated development environment according to an embodiment of this application;
FIG. 3(b) to FIG. 3(e) are a schematic flowchart of a program debugging method according to an embodiment of this application;
FIG. 4 is a diagram of an architecture of a program development product to which a program debugging method is applicable according to an embodiment of this application;
FIG. 5 is a diagram of an architecture of a debugging module of an integrated development environment according to an embodiment of this application;
FIG. 6 is a flowchart of interaction between functional modules in a debugging module and a debugger according to an embodiment of this application;
FIG. 7 is a diagram of functions of a timeline interface module in a debugging module according to an embodiment of this application;
FIG. 8 is a flowchart of interaction for backtracing debugging information between functional modules in a debugging module and a debugger according to an embodiment of this application;
FIG. 9(a) to FIG. 9(i) are diagrams of an example application scenario of an integrated development environment to which a program debugging method is applicable according to an embodiment of this application;
FIG. 10(a) to FIG. 10(e) are diagrams of an example application scenario of an integrated development environment to which a program debugging method is applicable according to an embodiment of this application; and
FIG. 11 is a diagram of an example structure of an electronic device according to an embodiment of this application.

### DESCRIPTION OF EMBODIMENTS

The following clearly describes the technical solutions in embodiments of this application in detail with reference to the accompanying drawings. Mutual reference may be made between the following embodiments.

It can be understood that the technical means of this application are applicable to an electronic device that can run an integrated development environment. The electronic device may be specifically a personal computer (personal computer, PC), an ultra-mobile personal computer (ultra-mobile personal computer, UMPC), a hardware server (including an entry-level server, a workgroup-level server, a department-level server, and an enterprise-level server), or a cloud server. The electronic device may further include a terminal device, for example, a tablet computer, a notebook computer, a computer, or a netbook.

The following first describes some terms in embodiments of this application.

Forward debugging: The forward debugging is a breakpoint debugging method in which a program code debugging process is traced in a stepwise manner. During forward debugging of a program, the program starts to be executed from a starting point. A debugger suspends the execution at a breakpoint that is set in code, allowing a developer to debug the code of the program in a stepwise manner, view a variable value of a to-be-observed variable, and the like. The forward debugging may be used to check for a logic error, a variable value error, and other problems in code.

Reverse debugging: The reverse debugging is an enhanced capability of breakpoint debugging, allowing a developer to perform a debugging operation in a direction opposite to a direction of the forward debugging (for example, returning to a previous line or a previous breakpoint position in a forward debugging process). This can effectively improve debugging function use experience and problem locating efficiency of the developer. The reverse debugging technology is currently used in some debugging command-line tools and integrated development environments, and may be used together with the forward debugging. Based on positions, in a debugging process, to which returning is performed during the reverse debugging, the reverse debugging may be classified into reverse breakpoint debugging, reverse single-step debugging, and the like. Through these operations, the developer may view debugging information (which may also be referred to as historical information) of a debugged program. The reverse debugging may be used to reproduce a complex problem, for example, a multithreading problem, that occurs during the forward debugging.

Timeline view: The timeline view is a view that displays a time attribute, a time position, and a time sequence of an object, and is usually used in a software and hardware performance optimization tool, an audio and video editing tool, and the like.

The following describes the technical solutions of this application with reference to specific scenarios.

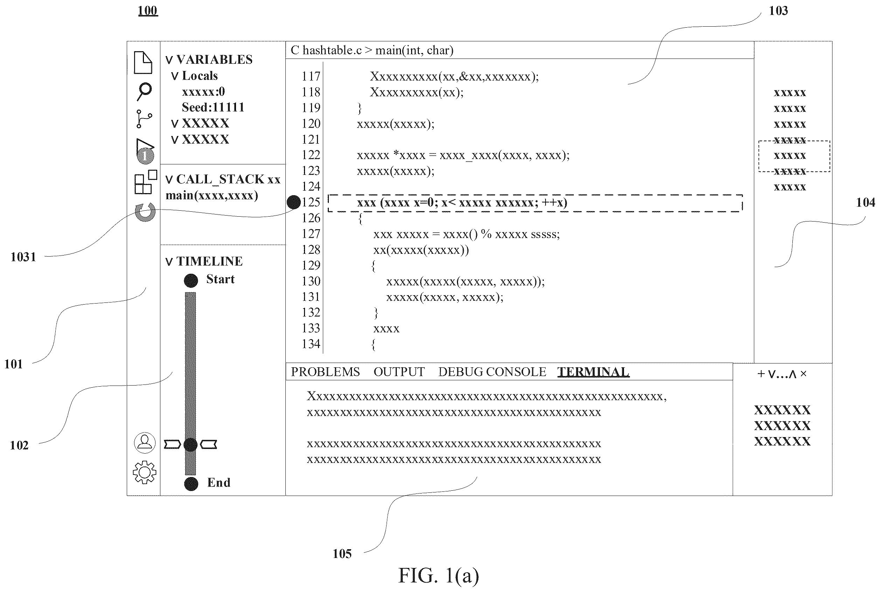

FIG. 1(a) shows an application scenario of an application interface of an integrated development environment. As shown in FIG. 1(a), the application interface 100 of the integrated development environment may include a plurality of functional areas: a toolbar area 101, a debugging area 102, a code area 103, an auxiliary display area 104, and a console area 105. The toolbar area 101 includes a plurality of controls for implementing an application function of the integrated development environment, for example, a query control and a debugging control. The query control is used to query information in code. The debugging control is used to start debugging of a program. The program herein may also be referred to as a target program.

The debugging area 102 is used to display debugging information (a variable value of a to-be-observed variable, a system resource occupation status, thread information, stack information, and the like) of code corresponding to the program, and provide a timeline function for various types of debugging (for example, reverse debugging) of the code.

A developer or a tester (the developer is used as an example below for description) may set a keypoint (a breakpoint) for the code in the code area 103, for example, set a keypoint for a code line, which may also be referred to as a code position (for example, 125). In some embodiments, a method for setting the keypoint for the code may include: The developer performs a user operation on the code line 125 in the code displayed in the code area 103, for example, performs a double-click/double-tap operation on the code line. In response to the user operation, an identifier 1031 of the keypoint is displayed at a position of the code line 1:25 in the code area 103. In a process of debugging the code by the developer, the keypoint may be displayed in the debugging area 102 based on the timeline function. To be specific, a bookmark (Bookmark) is set for the foregoing keypoint (the keypoint corresponding to the code line 125), and the bookmark is displayed on a single timeline in chronological order. If the developer sets a plurality of keypoints for the code, the developer may view a plurality of bookmarks on the timeline during debugging. The bookmarks have a time sequence relationship, namely, a chronological relationship. The code area 103 may further display the following information: code in a source code file currently displayed in the integrated development environment, code line information (a line number) corresponding to the code, highlighted display of the code, and the like.

The auxiliary display area 104 may display a file name of the code in the code area 103 and a position of a currently displayed code snippet in an entire segment of code.

The console area 105 is used to display information generated after the program is debugged, including debugging result information, exception information, and the like.

In some embodiments, when the developer wants to backtrace debugging information corresponding to a keypoint in debugging, the developer may directly select a corresponding bookmark in the debugging area 102, for example, click/tap a bookmark on the timeline in the debugging area 102, to backtrace the debugging information. In this case, the code area 103 displays code at a keypoint corresponding to the bookmark. For example, a code line in which the keypoint corresponding to the bookmark is located is displayed in a highlighted manner. In addition, the debugging area 102 also displays debugging information corresponding to the code, for example, a variable value of a to-be-observed variable, stack information, and code exception information that correspond to the code for which the keypoint is set.

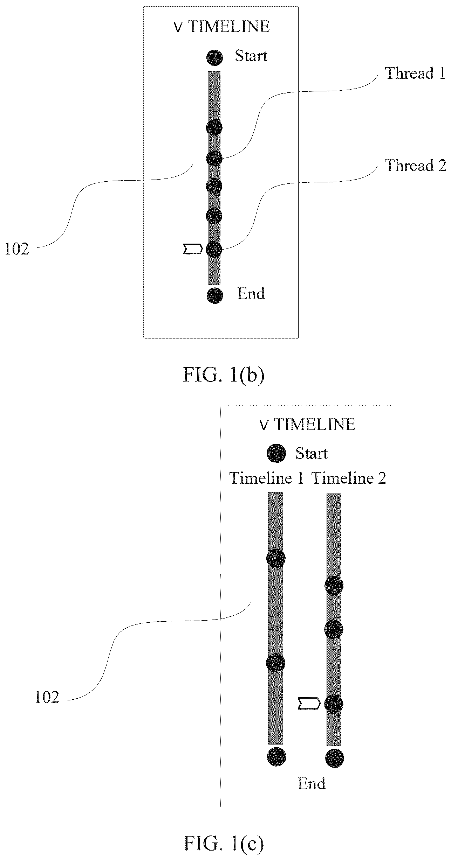

However, in a process in which the developer debugs the program by using the integrated development environment shown in FIG. 1(a), if the code relates to multi-thread concurrent execution, the timeline in the debugging area 102 in FIG. 1(a) cannot intuitively indicate a time sequence relationship between threads. For example, FIG. 1(b) is a diagram of displaying keypoints by using a timeline function in a debugging area 102 of an application interface of an integrated development environment in a multithreading scenario. It can be learned that the debugging area 102 of the integrated development environment may display a plurality of keypoints on one timeline, including, for example, a keypoint corresponding to a thread 1 and a keypoint corresponding to a thread 2. To be specific, in the multithreading scenario, only a time sequence relationship between all keypoints can be indicated, but a relationship between a thread and a keypoint and a time sequence relationship between keypoints corresponding to different threads cannot be indicated. When there are many keypoints, it is difficult to distinguish between the keypoints, it is difficult to establish a correspondence between a keypoint and a specific code position, and it is impossible to effectively implement visual locating of a multithreading problem.

To resolve the foregoing problems, embodiments of this application provide a program debugging method applied to an integrated development environment. In the method, during debugging of a program, the integrated development environment obtains thread information corresponding to a keypoint that is set for code of the program, and generates a separate timeline for each thread with a corresponding keypoint based on the thread information. In a multithreading scenario, a plurality of timelines may be displayed, and the plurality of timelines may be arranged according to a time sequence of starting corresponding threads. For example, a timeline corresponding to a thread started earlier is displayed on the left of a timeline corresponding to a thread started later. The plurality of timelines may be arranged in parallel. Each timeline further includes a direction. The direction herein may be a time sequence of starting program debugging, that is, a sequence of a time axis.

For example, FIG. 1(c) is a diagram of displaying keypoints by using a timeline function in a debugging area 102 of an application interface of an integrated development environment in a multithreading scenario. It can be learned that the debugging area 102 of the integrated development environment displays a timeline corresponding to each thread (for example, a timeline 1 corresponding to a thread 1 and a timeline 2 corresponding to a thread 2). A keypoint of a thread corresponding to each timeline is displayed on the timeline. A position of the keypoint on the timeline may be a time point (which may also be referred to as hit time) at which a thread corresponding to the timeline debugs or runs a program to pass the keypoint. Thread information and time sequence information that correspond to the keypoint are displayed in two dimensions. During debugging, a developer may directly observe positions of keypoints on a plurality of timelines to determine a time sequence relationship between keypoints in a multi-thread concurrent execution scenario. In addition, the developer may also click/tap a keypoint of a timeline to trace debugging information of a thread behavior corresponding to the timeline, to implement visual debugging and locating of code in a multithreading scenario. The timeline 1 and the timeline 2 in FIG. 1(c) may be timeline identifiers for timelines, and the digits 1 and 2 may indicate a time sequence of starting threads corresponding to the timelines. For example, the thread 1 corresponding to the timeline 1 is started earlier than the thread 2 corresponding to the timeline 2. In some embodiments, in the debugging area 102, a timeline may be distinguished directly by using a thread identifier or by using both a thread identifier and a timeline identifier. The thread identifier herein may be a thread ID, a thread name defined by the developer, or the like.

In some embodiments, during debugging of the program, the integrated development environment may further obtain stay code line information corresponding to a keypoint that is set for code of the program. The stay code line information may be used for the integrated development environment to display a code line of the code for which the keypoint is set, to be specific, identify a code line corresponding to a keypoint in a source code file currently displayed in the integrated development environment. A code line corresponding to a keypoint and a timeline corresponding to the keypoint are combined. To be specific, code line information corresponding to the keypoint is also displayed on the timeline. In this way, during debugging, the developer can observe, based on code lines of keypoints, debugging information of same or different thread behaviors corresponding to different keypoints in a same thread.

It can be learned that, according to the foregoing program debugging method, when the program relates to multi-thread concurrent execution, a program debugging process is displayed in two manners: timeline-based display of threads (that is, a plurality of timelines), in combination with code line information of a keypoint. This enhances efficiency of performing program debugging by using the integrated development environment, improves visual effect of a debugging function of the integrated development environment in a multithreading scenario, and improves efficiency of locating, by the developer, an exception or a problem in code.

In some possible implementations, the program debugging method in embodiments of this application may include two types of keypoints (breakpoints), for example, a first-type keypoint and a second-type keypoint. For the first-type keypoint, when the integrated development environment debugs the program to pass code at the first-type keypoint, the integrated development environment does not control execution of the program to be suspended, but only caches debugging information of the first-type keypoint. For the second-type keypoint, when the integrated development environment debugs the program to pass code at the second-type keypoint, the integrated development environment controls execution of the program to be suspended. Therefore, the developer may choose to set the first-type keypoint for code of the program that relates to multi-thread concurrent execution, and set the second-type keypoint for code after the first-type keypoint, for example, set the second-type keypoint for subsequent code that does not relate to multi-thread concurrent execution. When the integrated development environment debugs the program to pass the first-type keypoint, to be specific, pass the code that relates to multi-thread concurrent execution, a plurality of times of suspension of the program due to the multi-thread concurrent execution can be avoided. When the integrated development environment debugs the program to pass the second-type keypoint, the integrated development environment controls execution of the program to be suspended, and displays, through timeline-based display of threads based on a timeline corresponding to the first-type keypoint, debugging information of the first-type keypoint in the program that has been debugged.

In some other implementations, alternatively, only the first-type keypoint may be displayed on the timeline in the program debugging method, to avoid a case in which a large quantity of keypoints are set in the code of the program and consequently, an excessive quantity of keypoints are displayed on the timeline during debugging.

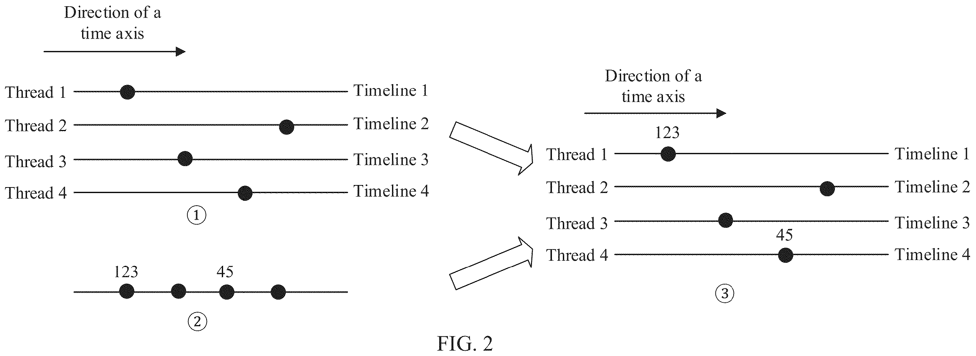

FIG. 2 is a diagram of effect of timeline-based display of threads and effect of displaying code line information of keypoints on timelines in a program debugging method to which embodiments of this application are applicable. According to content marked as ① in FIG. 2, during debugging of multi-thread concurrent execution, an integrated development environment may generate a separate timeline, for example, a timeline 1 to a timeline 4, for each thread (for example, a thread 1 to a thread 4) for debugging code, for which a keypoint is set, of a program. It can be learned that the timeline 1 to the timeline 4 may be arranged in parallel based on a direction of a time axis. Starting positions of the timeline 1 to the timeline 4 may be a starting time point at which the program is to be debugged in a multi-thread concurrent execution mode, and a position of a keypoint on each timeline may be a time point at which a thread corresponding to the timeline debugs or runs the program to pass the keypoint. According to content marked as ② in FIG. 2, the integrated development environment may obtain a code line at a keypoint in code that relates to multi-thread concurrent execution mode, to be specific, code line information (for example, 123 and 45) corresponding to a keypoint in a source code file corresponding to the code. Through combination of the content of ① and ②, according to content marked as ③ in FIG. 2, a keypoint and code line information of the keypoint are displayed on a timeline corresponding to a thread. In FIG. 2, a keypoint displayed on each timeline is a keypoint in code that corresponds to the program and that has been debugged by each thread. To be specific, a keypoint in code that has not been debugged is not displayed on the timeline, and with proceeding of a program debugging process, keypoints in the code are sequentially displayed on the timeline.

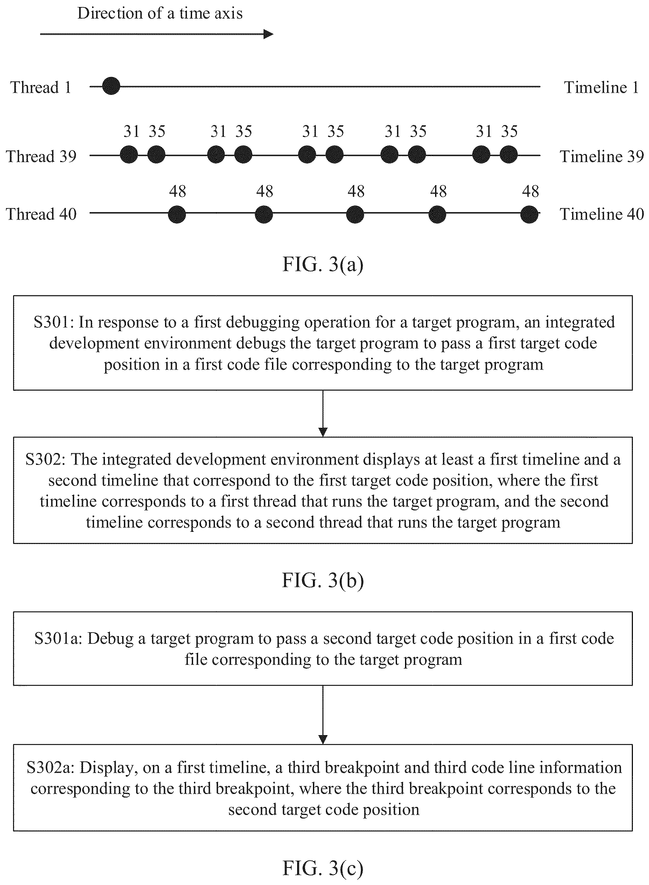

In some embodiments, in a process in which the integrated development environment debugs the program in the multi-thread concurrent execution mode, each thread may repeatedly debug all or a part of code for which a keypoint is set. As shown in FIG. 3(a), during program debugging of the integrated development environment, a plurality of or a plurality of groups of keypoints that are at different positions but correspond to a same code line are separately displayed on timelines of a started thread 39 and a started thread 40 (for example, keypoints 31 and 35 are displayed on the timeline 39 for a plurality of times, and a keypoint 48 is displayed on the timeline 40 for a plurality of times). To be specific, each time a thread performs debugging to pass code at a keypoint, the integrated development environment displays the keypoint on a timeline corresponding to the thread, and different positions, on a same timeline, of keypoints corresponding to a same code line indicate different time points at which the thread runs the program to pass the keypoints. Each keypoint may further correspond to respective debugging information (to be specific, a variable value of a to-be-observed variable, code exception information, and the like). It can be learned from FIG. 3(a) that the integrated development environment can more clearly represent, by using a timeline, debugging information of code that each thread has passed during debugging (or referred to as code that each thread has passed during execution). The keypoints 31, 35, and 48 herein may be first-type keypoints.

FIG. 3(b) is a schematic flowchart of a program debugging method according to an embodiment of this application. The program debugging method may be applied to an integrated development environment, and the program debugging method includes the following steps.

S301: In response to a first debugging operation for a target program, an integrated development environment debugs the target program to pass a first target code position in a first code file corresponding to the target program.

For example, the target program herein may be referred to as a program, a to-be-debugged program, or a program under debugging. The first debugging operation is a debugging operation performed by a developer for the target program after the developer opens code of the target program by using the integrated development environment. The target program may correspond to at least the first code file and a second code file. For example, the target program may be debugged to sequentially pass code in the first code file and code in the second code file. The first target code position herein may be a code line in the first code file. For example, the first target code position may be a code line, in the first code file, in which a second-type keypoint is set.

S302: The integrated development environment displays at least a first timeline and a second timeline that correspond to the first target code position, where the first timeline corresponds to a first thread that runs the target program, and the second timeline corresponds to a second thread that runs the target program.

For example, during debugging for multi-thread concurrent execution of the target program, the integrated development environment may start at least the first thread and the second thread, and display, in a debugging area of the integrated development environment, the first timeline corresponding to the first thread and the second timeline corresponding to the second thread. At least one first breakpoint and first code line information corresponding to the first breakpoint may be displayed on the first timeline, at least one second breakpoint and second code line information corresponding to the second breakpoint may be displayed on the second timeline, and the first breakpoint and the second breakpoint correspond to code positions before the first target code position in the first code file. To be specific, the first breakpoint and the second breakpoint may be code lines, in the first code file, in which first-type keypoints are set, and the code lines corresponding to the first breakpoint and the second breakpoint are located before the code line corresponding to the first target code position.

In some implementations, the code lines in the first code file that correspond to the first breakpoint and the second breakpoint may be the same, and the first code line information and the second code line information that are displayed on the first timeline and the second timeline are also the same. The first breakpoint corresponds to first hit time information, and the first hit time information indicates time at which the first thread runs the target program to pass the first breakpoint. The second breakpoint corresponds to second hit time information, and the second hit time information indicates time at which the second thread runs the target program to pass the second breakpoint.

In some implementations, a starting position of the first timeline displayed in the debugging area of the integrated development environment may be the same as a starting position of the second timeline. To be specific, a straight line that passes through the starting position of the first timeline and the starting position of the second timeline is perpendicular to the first timeline and is perpendicular to the second timeline. When the first hit time information is different from the second hit time information, a position of the first breakpoint on the first timeline is different from a position of the second breakpoint on the second timeline. To be specific, a straight line that passes through the first breakpoint and the second breakpoint is not parallel to the straight line that passes through the starting position of the first timeline and the starting position of the second timeline. First thread identification information herein may be a timeline identifier of the first timeline, and second thread identification information may be a timeline identifier of the second timeline. For example, the first timeline and the second timeline may be respectively represented by a timeline 1 and a timeline 2, and the digits 1 and 2 may indicate a time sequence of starting the first thread and the second thread that correspond to the first timeline and the second timeline.

In some implementations, when the target program is debugged to pass the first target code position in the first code file corresponding to the target program, a code area of the integrated development environment switches to displaying the first code file, in other words, the code area of the integrated development environment currently displays the first code file.

The program debugging method, shown in FIG. 3(b), in this embodiment of this application may further include a process shown in FIG. 3(c). The process includes the following steps.

S301a: Debug the target program to pass a second target code position in the first code file corresponding to the target program.

For example, the second target code position herein may be a code line in the first code file. For example, the second target code position may be a code line, in the first code file, in which a second-type keypoint is set.

S302a: Display, on the first timeline, a third breakpoint and third code line information corresponding to the third breakpoint, where the third breakpoint corresponds to the second target code position.

For example, when the first thread debugs the target program to pass the second target code position in the first code file corresponding to the target program, at least one third breakpoint and third code line information corresponding to the third breakpoint may continue to be displayed on the first timeline, where a code line corresponding to the third breakpoint herein is located before the code line corresponding to the second target code position.

In some implementations, the third breakpoint corresponds to third hit time information, and the third hit time information indicates time at which the first thread runs the target program to pass the third breakpoint. It can be learned that the first thread runs the target program to sequentially pass the first breakpoint and the third breakpoint. Therefore, when the first hit time information is different from the third hit time information, a position of the third breakpoint on the first timeline is different from the position of the first breakpoint on the first timeline, and the position of the third breakpoint on the first timeline may be after the position of the first breakpoint on the first timeline.

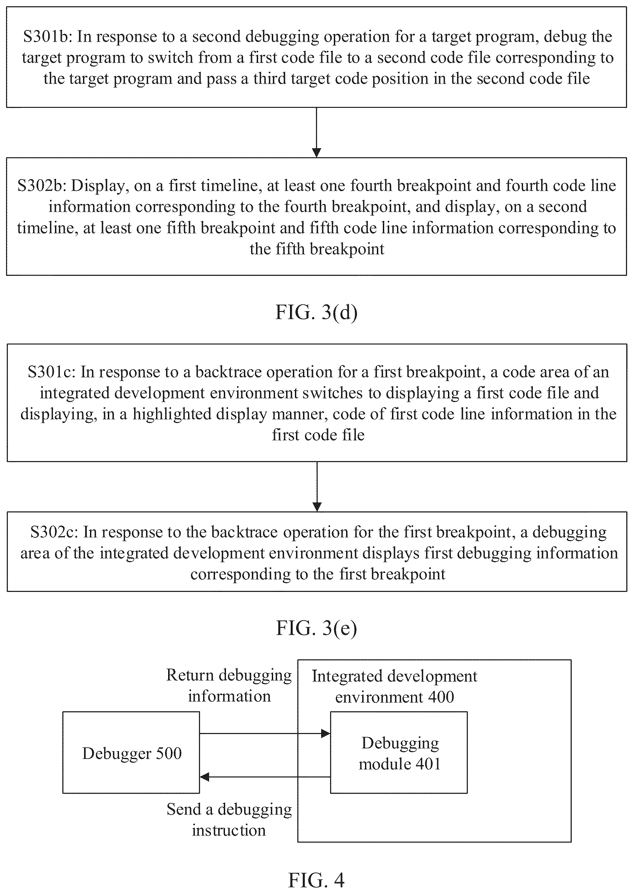

The program debugging method, shown in FIG. 3(b), in this embodiment of this application may further include a process shown in FIG. 3(d). The process includes the following steps.

S301b: In response to a second debugging operation for the target program, debug the target program to switch from the first code file to a second code file corresponding to the target program and pass a third target code position in the second code file.

For example, the second debugging operation herein is a next debugging operation performed by the developer for the target program by using the integrated development environment. The third target code position herein may be a code line in the second code file. For example, the third target code position may be a code line, in the second code file, in which a second-type keypoint is set.

S302b: Display, on the first timeline, at least one fourth breakpoint and fourth code line information corresponding to the fourth breakpoint, and display, on the second timeline, at least one fifth breakpoint and fifth code line information corresponding to the fifth breakpoint, where the fourth breakpoint and the fifth breakpoint correspond to code positions before the third target code position in the second code file.

For example, the fourth breakpoint and the fifth breakpoint may be code lines, in the second code file, in which first-type keypoints are set, and the code lines corresponding to the fourth breakpoint and the fifth breakpoint are located before the code line corresponding to the third target code position.

In some implementations, when the target program is debugged to pass the third target code position in the second code file, the code area of the integrated development environment switches to displaying the second code file. The first code line information is hidden on the first timeline, and the second code line information is hidden on the second timeline. On the first timeline and the second timeline, only code line information of a breakpoint that is set in the second code file currently displayed in the integrated development environment may be displayed, and code line information of a breakpoint that is set in the non-currently-displayed first code file is not displayed.

The program debugging method, shown in FIG. 3(b), in this embodiment of this application may further include a process shown in FIG. 3(e). The process includes the following steps.

S301c: In response to a backtrace operation for the first breakpoint, the code area of the integrated development environment switches to displaying the first code file and displaying, in a highlighted display manner, code of the first code line information in the first code file.

For example, the backtrace operation herein may be that the developer backtraces, by clicking/tapping the first breakpoint on the first timeline, debugging information of a thread behavior corresponding to the first timeline. The code area of the integrated development environment may switch to displaying the first code file and displaying code in the first code file in a highlighted manner based on the first code line information of the first breakpoint.

S302c: In response to the backtrace operation for the first breakpoint, the debugging area of the integrated development environment displays first debugging information corresponding to the first breakpoint, where the first debugging information includes at least one of the following: a variable value of a first to-be-observed variable, the first thread identification information, the first hit time information, and the first code line information.

For example, in addition to displaying the first debugging information of the first breakpoint, the debugging area of the integrated development environment may further display the first code line information and hide the fourth code line information on the first timeline, and display the second code line information and hide the fifth code line information on the second timeline.

After the program debugging method provided in this application and the effects of the program debugging method are described, the following describes, by using FIG. 4, a diagram of an architecture of a program development product to which the program debugging method in embodiments of this application is applicable.

As shown in FIG. 4, the program development product includes an integrated development environment 400 and a debugger 500. The integrated development environment 400 includes a debugging module 401. The debugging module 401 has a debugging capability (including forward debugging, reverse debugging, or the like) for a program. The debugging module 401 may interact with the debugger 500. In this embodiment of this application, the debugger 500 herein may be configured to debug a written program in a row-wise manner according to an execution order corresponding to the program. The debugger 500 may be in a one-to-one correspondence with a programming language corresponding to the written program. In other words, the debugger 500 may be a debugging functional module provided by a running environment of the programming language. In some embodiments, when a developer opens code of the program by using the integrated development environment to start program debugging, the debugger 500 may receive a debugging instruction from the debugging module 401, and debug the program according to the received debugging instruction. After the developer starts program debugging by using the integrated development environment 400, the debugging module 401 may send the debugging instruction to the debugger 500, and obtain and store debugging information returned by the debugger 500. The debugging module 401 may further display the debugging information on a visual interface of the integrated development environment, and during debugging of multi-thread concurrent execution, display debugging information of the program through timeline-based display of threads in combination with code line information of keypoints in the program, that is, provide a capability of displaying visualized debugging in a multithreading scenario. The debugger 500 herein is configured to debug the program, to be specific, execute code corresponding to the program in a debugging mode, and monitor/track debugging information corresponding to the program during debugging (for example, a change in a variable in a storage area or a change in a stack during debugging of the program).

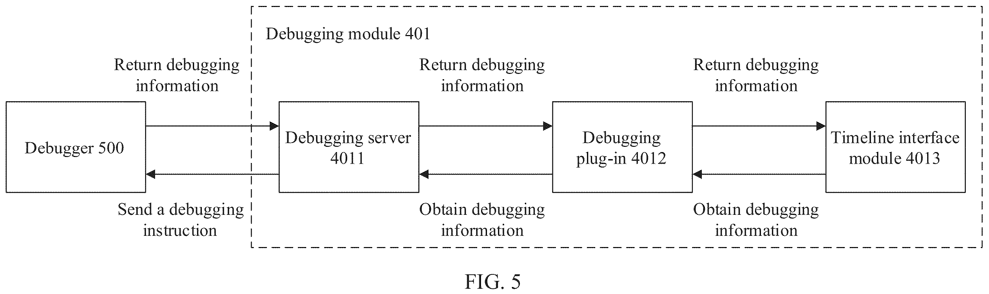

The following further describes, by using FIG. 5, the debugging module 401 in the integrated development environment 400 shown in FIG. 4. The debugging module 401 may also be referred to as a program debugging apparatus. As shown in FIG. 5, the debugging module 401 may include a debugging server 4011, a debugging plug-in 4012, and a timeline interface module 4013.

The debugging server 4011 may interact with the debugger 500. After the developer starts program debugging by using the integrated development environment 400, the debugging server 4011 may send the debugging instruction to the debugger 500, and the debugger 500 debugs the program according to the debugging instruction. The debugging server 4011 may obtain and store the debugging information returned by the debugger 500. The debugging information herein may include all debugging information generated in a process of debugging the program by the debugger 500, including: a quantity of lines of debugged code, generated exception information, and the like (which may also be referred to as debugging information needed for forward debugging); and debugging information of all keypoints that are set in the code, hit time, thread information, and stay code line information. Debugging information of a keypoint may include: a variable value of a to-be-observed variable at a time point at which the program is run to pass the keypoint, a system resource occupation status, and the like. The debugging server 4011 may sequentially store the debugging information, the thread information, and the stay code line information of all the keypoints based on the hit time, to be specific, store a correspondence between debugging information of a keypoint and hit time, thread information, and stay code line information. The correspondence may also be referred to as basic debugging information of the keypoint. The debugging server 4011 may further return, to the debugging plug-in 4012, stored debugging information that is needed for normal debugging of the program and stored basic debugging information of all the keypoints.

The debugging plug-in 4012 is configured to display, in a partial functional area on an application interface of the integrated development environment 400, debugging information needed for forward debugging, for example, display exception information in a console area 105. The debugging plug-in 4012 is further configured to send the received basic debugging information of all the keypoints to the timeline interface module 4013.

The timeline interface module 4013 may be configured to control/manage a debugging area 102 on the application interface of the integrated development environment 400. For example, the timeline interface module 4013 may complete timeline rendering work based on the basic debugging information of all the keypoints, to be specific, complete rendering effect corresponding to the basic debugging information, for example, render effect of timeline-based display of threads based on a correspondence between debugging information of a keypoint and thread information, that is, render a timeline and a keypoint on the timeline; render a position (a basic time sequence) of a keypoint on a timeline based on a correspondence between debugging information of the keypoint and hit time; and render, on a timeline based on a correspondence between debugging information of a keypoint and stay code line information, effect of displaying code line information corresponding to the keypoint.

In some embodiments, the timeline interface module 4013 may be a debugging functional submodule managed by the debugging plug-in 4012, and the debugging plug-in 4012 may alternatively include any other quantity of debugging functional submodules. The debugging plug-in 4012 included in the debugging module 401 is optional. To be specific, the debugging server 4011 may directly manage any quantity of other debugging functional submodules including the timeline interface module 4013. The debugging module 401 may be configured in the integrated development environment 400 as a separate functional module.

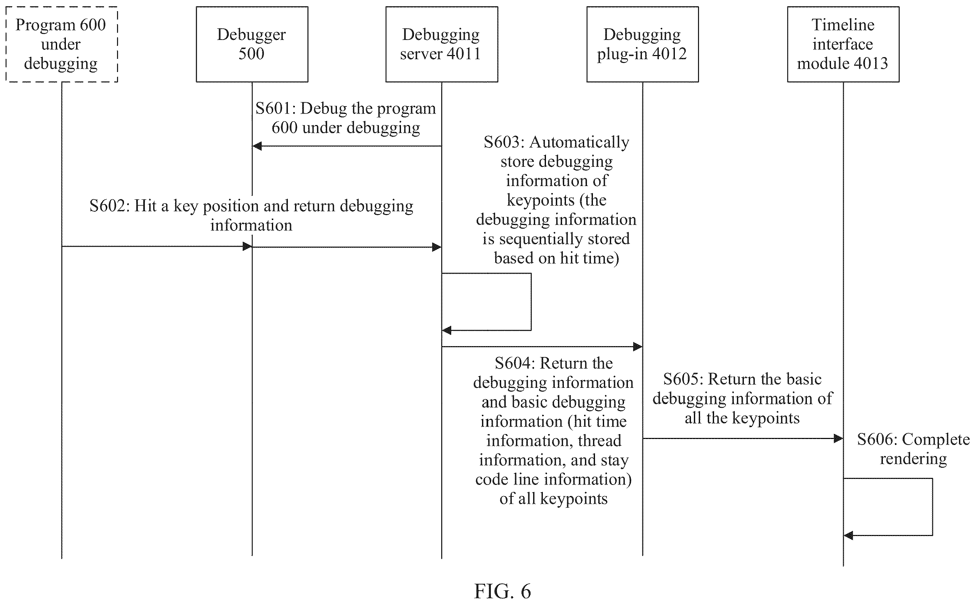

FIG. 6 is a flowchart of interaction between functional modules in the debugging module 401 described in FIG. 5 and the debugger 500. The flowchart of interaction may include the following steps.

S601: The debugger 500 debugs a program 600 under debugging in response to a debugging instruction sent by the debugging server 4011.

For example, the program 600 under debugging herein may also be referred to as a target program or a to-be-debugged program. The debugging instruction herein may be a debugging instruction generated by a debugging operation performed by a developer on the program 600 under debugging after the developer opens code of the program by using an integrated development environment.

S602: When the debugger 500 debugs the program 600 under debugging and hits a key position, the debugger 500 returns debugging information to the debugging server 4011.

For example, the debugging information herein may include debugging information that corresponds to the program 600 under debugging and that is generated when the debugger 500 debugs the program 600 under debugging and hits the key position, in other words, when the debugger 500 debugs or runs the program 600 under debugging to pass a code line in which a keypoint is located. The debugging information includes: generated exception information or the like (which may also be referred to as debugging information needed for forward debugging); and debugging information of all keypoints that are set in the code, hit time, thread information, and stay code line information.

S603: The debugging server 4011 automatically stores the debugging information of the keypoints, and sequentially stores the debugging information of all the keypoints based on the hit time.

For example, the debugging server 4011 may store a correspondence between debugging information of a keypoint and hit time information (to be specific, time at which the program 600 under debugging is debugged to pass the keypoint), thread information, and stay code line information. The correspondence may also be referred to as basic debugging information of the keypoint.

S604: The debugging server 4011 returns the debugging information needed for the forward debugging and basic debugging information of all the keypoints to the debugging plug-in 4012.

For example, the debugging plug-in 4012 herein is configured to display, in a partial functional area on an application interface of the integrated development environment, the debugging information needed for the forward debugging, for example, display the exception information.

S605: The debugging plug-in 4012 sends the received basic debugging information of all the keypoints to the timeline interface module 4013.

For example, the debugging plug-in 4012 herein may further send the received basic debugging information of all the keypoints to the timeline interface module 4013. The basic debugging information of all the keypoints is specially displayed in a functional area on the application interface of the integrated development environment through the timeline interface module 4013.

S606: The timeline interface module 4013 completes rendering work.

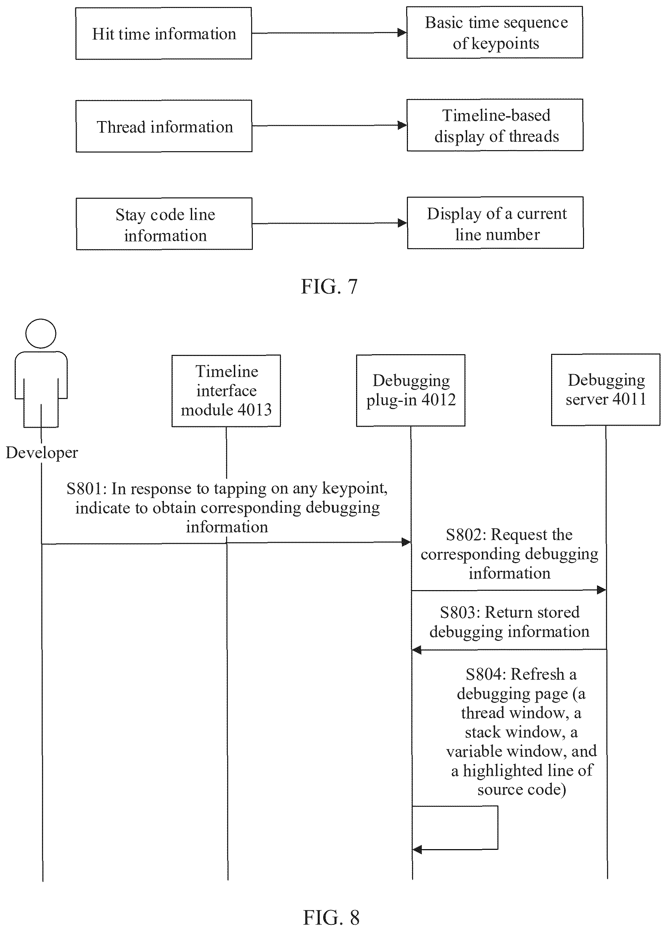

For example, as shown in FIG. 7, the timeline interface module 4013 herein may render effect of timeline-based display of threads based on a correspondence between basic debugging information of a keypoint and thread information, that is, render a timeline and a keypoint on the timeline; render a position (a basic time sequence) of a keypoint on a timeline based on a correspondence between debugging information of the keypoint and hit time information; and render, on a timeline based on a correspondence between debugging information of a keypoint and stay code line information, effect of displaying code line information (which may also be referred to as display of a current line number) corresponding to the keypoint.

It can be learned that, after the functional modules in the debugging module 401 shown in FIG. 5 are used in the integrated development environment 400 in FIG. 1, when functions included in original functional areas of the integrated development environment 400 are not changed, clearer debugging information of the program may be further displayed in one or more functional areas. For example, during debugging of multi-thread concurrent execution, effect of timeline-based display of threads may be displayed in the debugging area 102 on the application interface of the integrated development environment 400, so that the developer can more quickly locate an exception or a problem in the program.

In some embodiments, the debugging module 401 in the integrated development environment 400 described in FIG. 5 may not only represent, based on the effect of timeline-based display of threads during debugging of multi-thread concurrent execution, debugging information corresponding to same/different keypoints in code that corresponds to the program and that is debugged by a plurality of threads, but also allow the developer to click/tap a keypoint on one timeline to backtrace debugging information of a thread behavior corresponding to the timeline, that is, perform a backtrace operation. The following describes, by using FIG. 8, a flowchart of interaction for backtracing debugging information between functional modules in the debugging module 401 and the debugger 500. The flowchart of interaction may include the following steps.

S801: in response to tapping, by a developer, any keypoint in the timeline interface module 4013, the timeline interface module 4013 indicates the debugging plug-in 4012 to obtain debugging information of the corresponding keypoint.

For example, the keypoint herein may be any keypoint on a timeline that is displayed by the timeline interface module 4013 in the debugging area 102 of the integrated development environment shown in FIG. 1. A notification sent by the timeline interface module 4013 to the debugging plug-in 4012 may be considered as a notification instruction sent by the timeline interface module 4013, and the notification may carry hit time, thread information, stay code line information, and the like of the keypoint that are included in basic debugging information of the keypoint.

S802: After receiving the notification, the debugging plug-in 4012 requests the debugging information of the corresponding keypoint from the debugging server 4011.

For example, the debugging plug-in 4012 forwards the notification to the debugging server 4011.

S803: The debugging server 4011 obtains the debugging information of the corresponding keypoint, and returns the debugging information to the debugging plug-in 4012.

For example, the debugging server 4011 may search for the debugging information of the keypoint based on stored debugging information and the basic debugging information of the keypoint that is carried in the notification, and return the debugging information to the debugging plug-in 4012.

S804: The debugging plug-in 4012 refreshes a functional area of the integrated development environment based on the returned debugging information of the keypoint.

For example, the functional area herein may also be referred to as a debugging page of the integrated development environment, for example, the debugging area 102 and the code area 103 of the integrated development environment shown in FIG. 1. The debugging area 102 may include a thread window, a stack window, and a variable window that are separately used to display a variable value of a to-be-observed variable, a system resource occupation status, thread information, stack information, and the like. The code area 103 may display code in a highlighted manner (a highlighted line of source code) based on stay code line information corresponding to the debugging information of the keypoint. In this way, the developer can backtrace debugging information of a specific keypoint on a timeline.

It can be learned that, by using the functional modules corresponding to the debugging module 401 in the integrated development environment 400 described in FIG. 6 and FIG. 8, visual display of thread information and current-line-number information based on a keypoint on a timeline may be supported, and backtracing is supported. Especially in a multithreading scenario, thread information of a keypoint may be displayed, and may be used to determine a time sequence relationship between thread behaviors, to improve efficiency of locating a multithreading problem. In addition, current-line-number information of the keypoint is further displayed, and may be used to determine a specific keypoint, among a plurality of keypoints, whose debugging information needs to be viewed, and the keypoint may be clicked/tapped to directly perform backtracing.

After the interaction process of implementing the program debugging method by the integrated development environment in embodiments of this application is described by using FIG. 6 and FIG. 8, the following describes an application scenario of an application interface of an integrated development environment (namely, a program development product) to which the program debugging method is applicable.

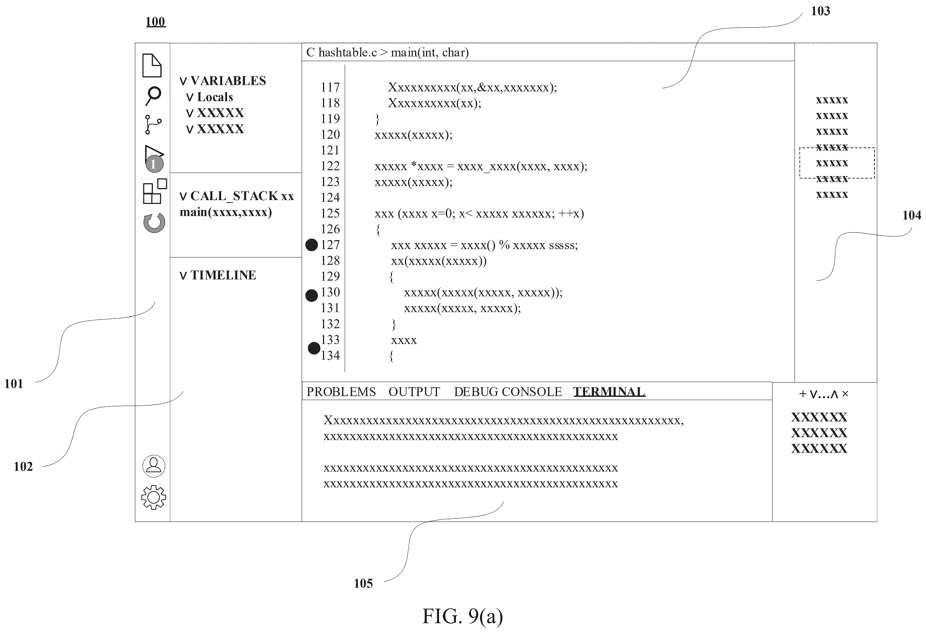

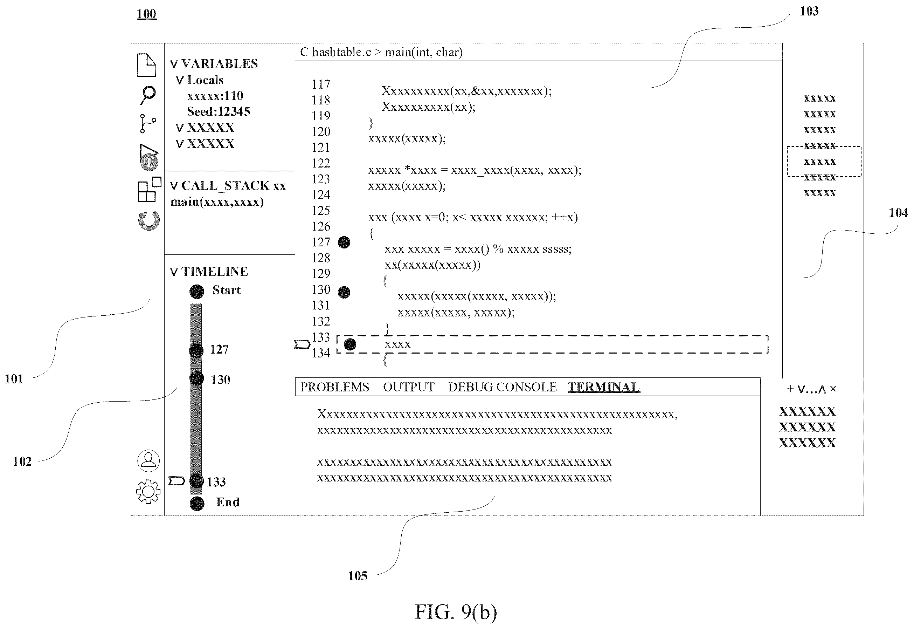

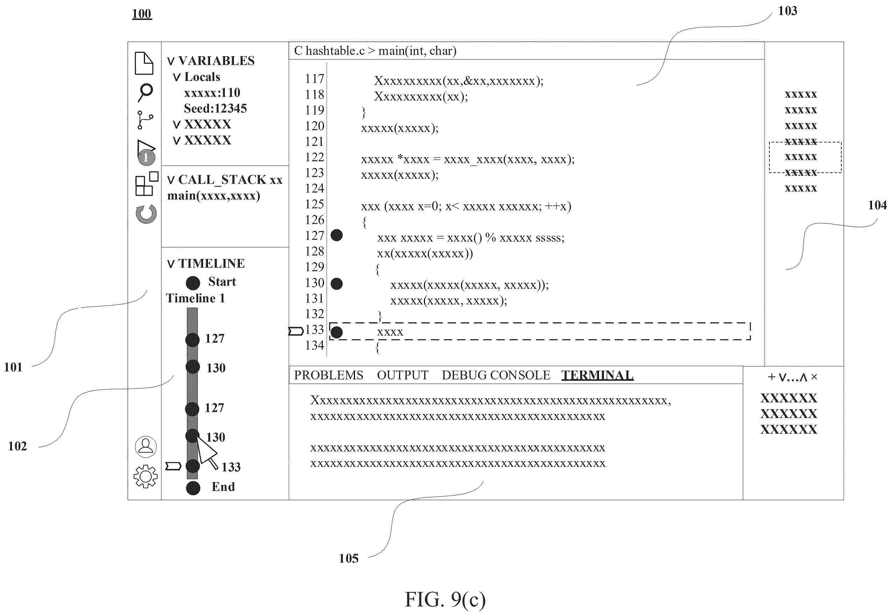

As shown in FIG. 9(a), the application interface 100 of the integrated development environment may include a plurality of functional areas such as a toolbar area 101, a debugging area 102, a code area 103, an auxiliary display area 104, and a console area 105. A developer may set a keypoint for code corresponding to a source code file (for example, hashtable.c in the figure) displayed in the code area 103. As shown in FIG. 9(a), the developer may set keypoints for code lines 127, 130, and 133 in the code. Keypoints that are set in the code lines 127 and 130 may be first-type keypoints, and a keypoint that is set in the code line 133 may be a second-type keypoint. After the developer starts debugging of a program by using a debugging control ① in the toolbar area 101, as shown in FIG. 9(b), during debugging of multi-thread concurrent execution, a first thread debugs or runs the program to pass the code line 127 and the code line 130 (which may also be referred to as a keypoint 127 and a keypoint 130) and reach the code line 133 (a keypoint 133), and then suspends execution. The debugging area 102 may display a timeline 1 corresponding to the first thread. Keypoints, at different positions, that correspond to the code lines 127, 130, and 133 and code line information corresponding to the keypoints are separately displayed on the timeline 1. For example, code line information is displayed at a position of a keypoint on the timeline 1 or on one side of the keypoint. The different positions of the keypoints indicate different time points at which the first thread debugs the program to pass the keypoints. It can be learned that the keypoint corresponding to the code line 133 may be at a position close to the end on the timeline 1. In some embodiments, alternatively, only the keypoints corresponding to the code lines 127 and 130, that is, the first-type keypoints, may be displayed the timeline 1. The debugging area 102 may display debugging information (for example, a variable value 110 of a to-be-observed variable xxxxx) obtained when the first thread debugs the program to pass the code line 133. If the first thread repeatedly debugs code in the code lines 127 and 130, a plurality of groups of keypoints and code line information that correspond to the code lines 127 and 130 are separately displayed on the timeline 1, and different positions of the plurality of groups of keypoints indicate that time points at which the first thread debugs the program to pass the keypoints are different. As shown in FIG. 9(c), the first thread performs debugging to pass the code in the code lines 127 and 130 twice. In this case, two groups (a first group and a second group) of keypoints corresponding to the code lines 127 and 130 are separately displayed on the timeline 1 sequentially.

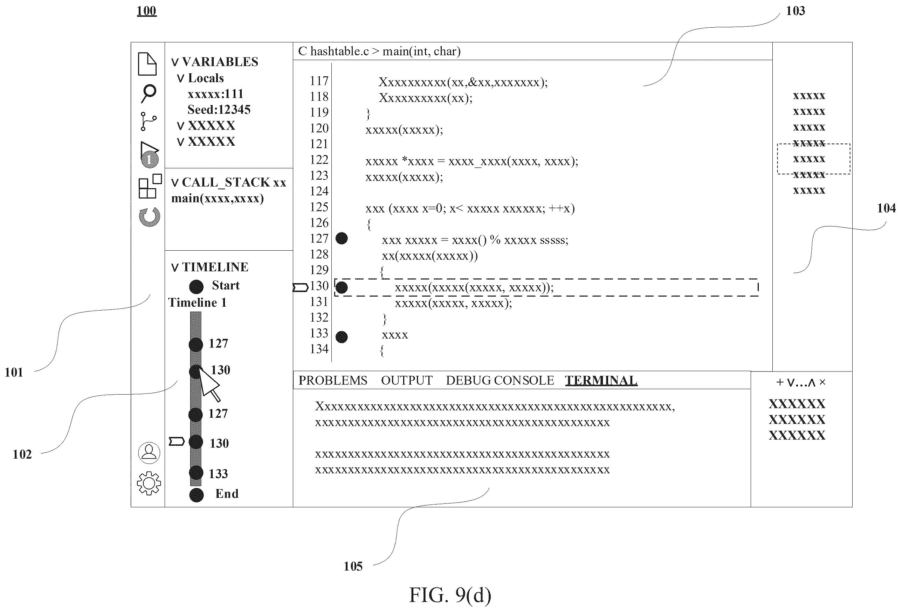

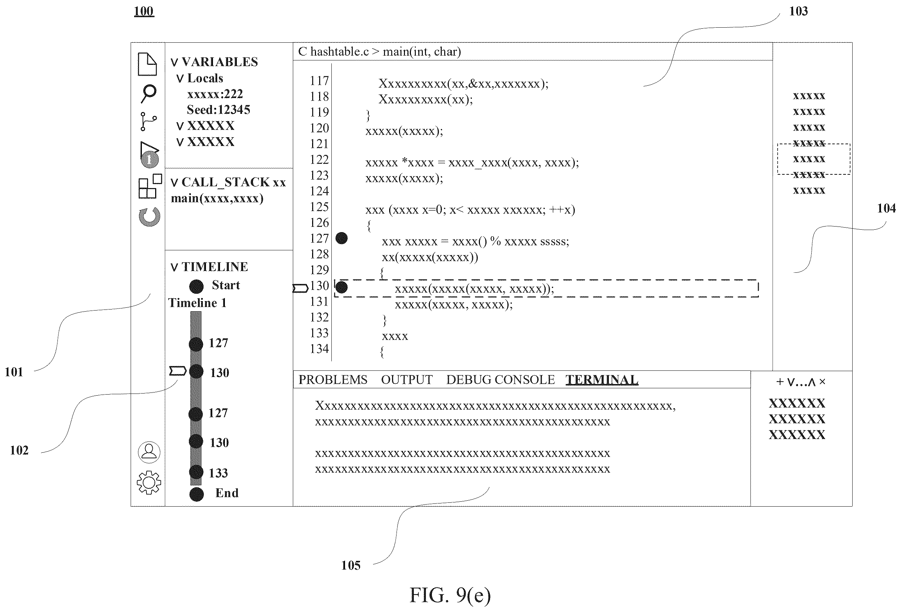

Still as shown in FIG. 9(c), if the developer clicks/taps a bookmark of a keypoint 130 in a later group (the second group) on the timeline 1 to backtrace debugging information of a thread behavior keypoint 130 corresponding to the timeline 1, as shown in FIG. 9(d), the debugging information displayed in the debugging area 102 also changes (for example, a variable value 111 of the to-be-observed variable xxxxx). If the developer clicks/taps a bookmark of a keypoint 130 in an earlier group (the first group) on the timeline 1 to backtrace debugging information of a thread behavior keypoint 130 corresponding to the timeline 1, as shown in FIG. 9(e), the debugging information displayed in the debugging area 102 also changes (for example, a variable value 222 of the to-be-observed variable xxxxx).

It can be learned that, after the first thread performs debugging to pass code at a keypoint, the keypoint is displayed on the timeline 1. Different positions, on the same timeline 1, of keypoints corresponding to a same code line indicate different time points at which the first thread debugs the program to pass the keypoints. The developer may click/tap a bookmark of a keypoint on the timeline 1 to trace debugging information of the keypoint, to implement visual debugging and locating of code.

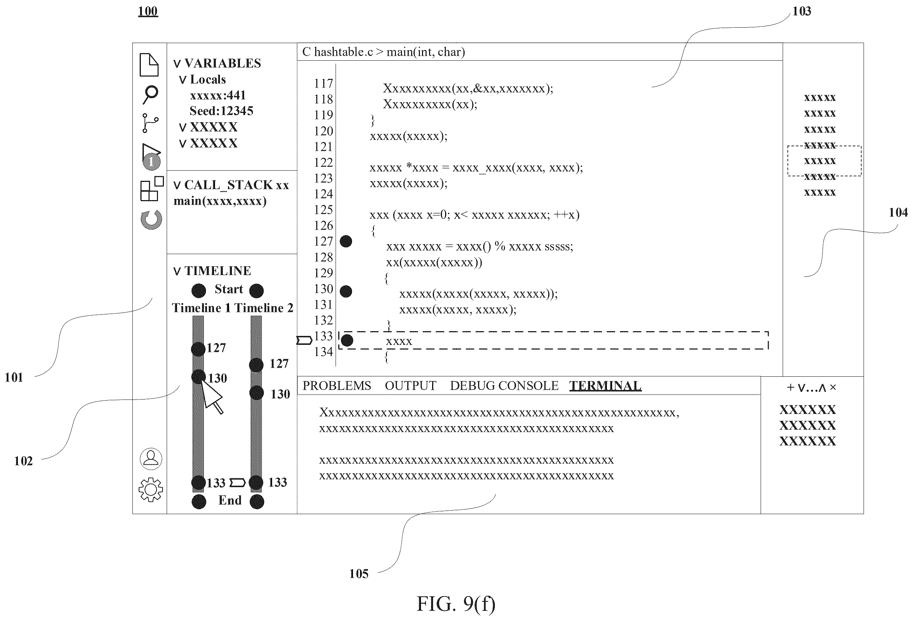

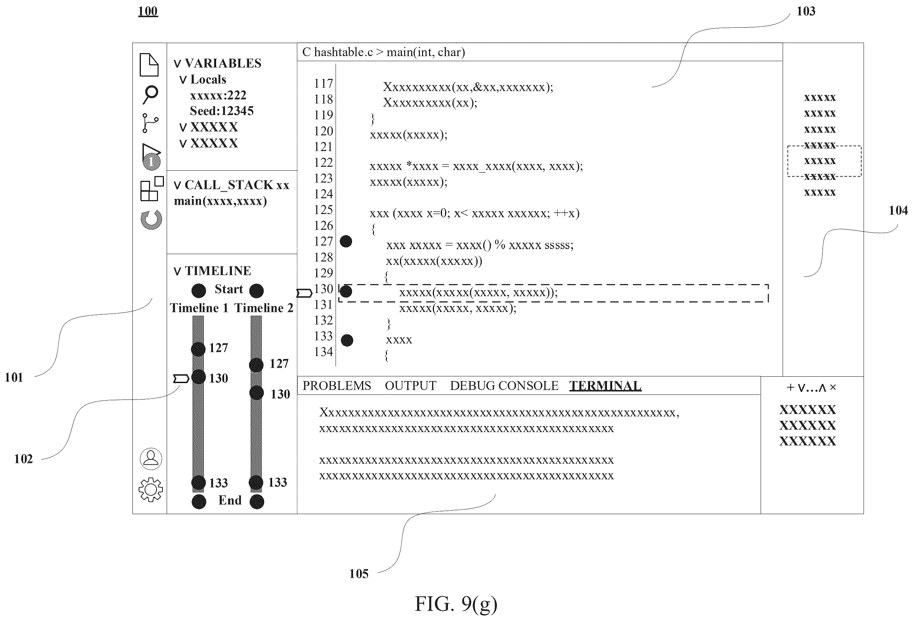

In some embodiments, during debugging of multi-thread concurrent execution, the debugging area 102 may alternatively display both a timeline 1 corresponding to a first thread and a timeline 2 corresponding to a second thread, and the first thread and the second thread debug or run the program to pass the code lines 127 and 130. As shown in FIG. 9(f), keypoints at different positions and code line information that correspond to the code lines 127 and 130 may be separately displayed on the timeline 1 and the timeline 2 (when both the first thread and the second thread repeatedly debug the code in the code lines 127 and 130 in the program, a plurality of groups of keypoints corresponding to the code lines 127 and 130 may alternatively be displayed on the timeline 1 and the timeline 2). In comparison with the timeline 1, positions of keypoints, on the timeline 2, that correspond to the code lines 127 and 130 may be different from positions of keypoints, on the timeline 1, that correspond to the code lines 127 and 130. This indicates that a time point at which the first thread debugs the program to pass the code lines 127 and 130 is different from a time point at which the second thread debugs the program to pass the code lines 127 and 130. In addition, because the first thread and the second thread are different threads, debugging information (for example, a variable value 441 of the to-be-observed variable xxxxx), displayed in the debugging area 102, of a keypoint that is on the timeline 2 and that corresponds to the code line 130 may also be different from debugging information of a keypoint that is on the timeline 1 shown in FIG. 9(c) and that corresponds to the code line 130. In this case, if the developer clicks/taps a bookmark of a keypoint 130 on the timeline 1 to backtrace debugging information of a thread behavior keypoint 130 corresponding to the timeline 1, as shown in FIG. 9(g), the debugging information displayed in the debugging area 102 also changes (for example, a variable value 222 of the to-be-observed variable xxxxx).

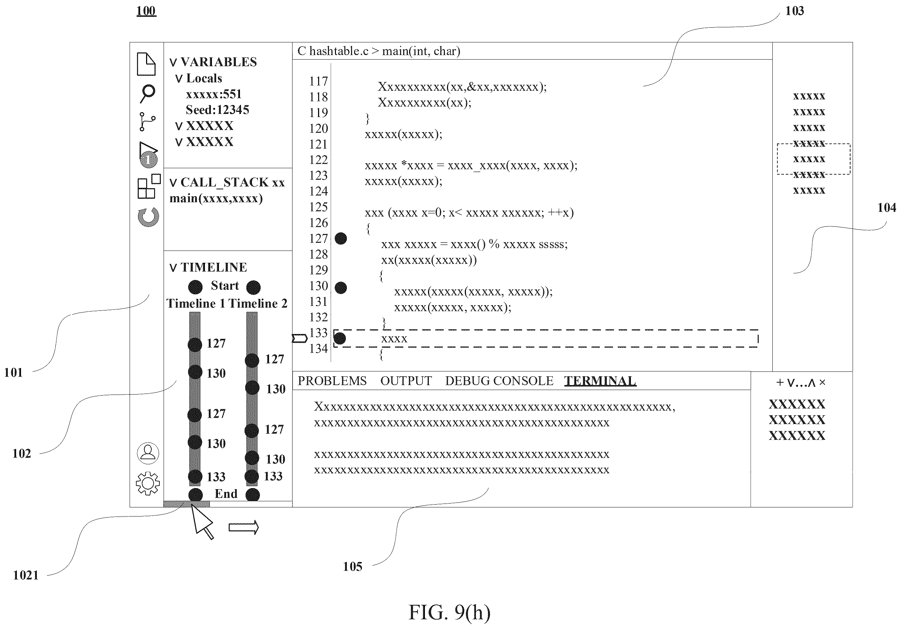

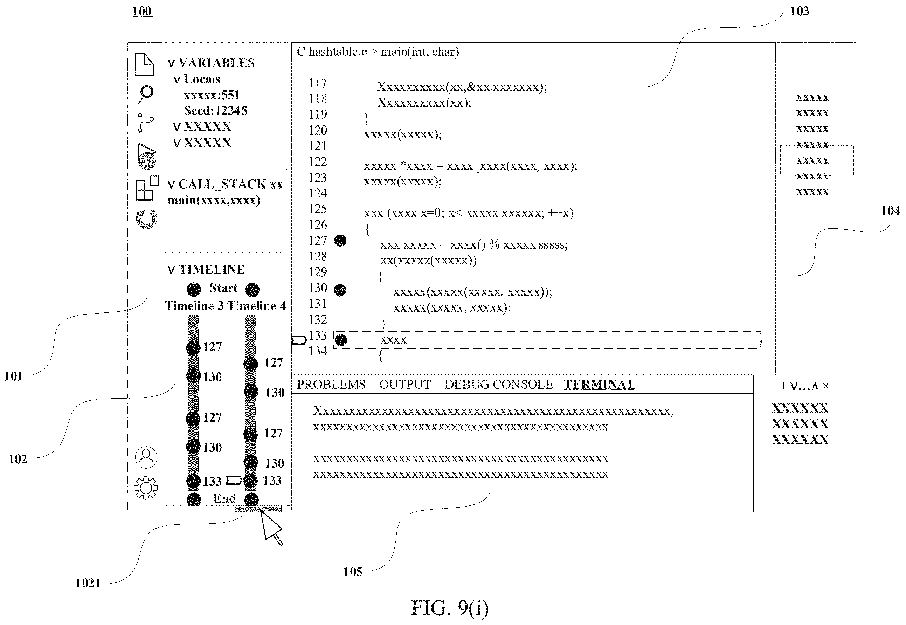

In some embodiments, if there are more than two threads (for example, a first thread to a fourth thread) for debugging the program, as shown in FIG. 9(h) and FIG. 9(i), the debugging area 102 may display a scrolling control 1021, and the developer may control the scrolling control 1021 to switch between timelines corresponding to a plurality of threads, for example, display a timeline 1 to a timeline 4 in a scrolling manner.

It can be learned that, in the application scenario, described in FIG. 9(a) to FIG. 9(h), of the integrated development environment to which the program debugging method is applicable, a target program or a to-be-debugged program corresponds to only one source code file. However, in some other implementations, if the target program or the to-be-debugged program relates to a plurality of source code files and the target program relates to multi-thread concurrent execution, only code line information of a keypoint that is set in a source code file currently displayed in the integrated development environment may be displayed on a timeline that corresponds to each thread and that is displayed in the integrated development environment. For a source code file that is open but is not displayed, code line information of a keypoint that is set in the source code file is not displayed. For a source code file that is not open, neither a keypoint that is set in the source code file nor code line information is displayed.

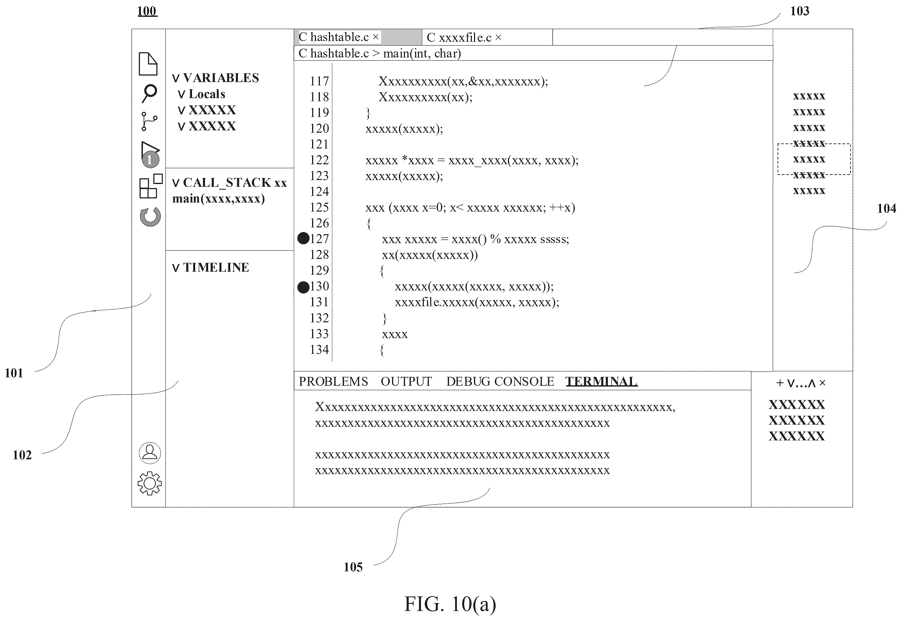

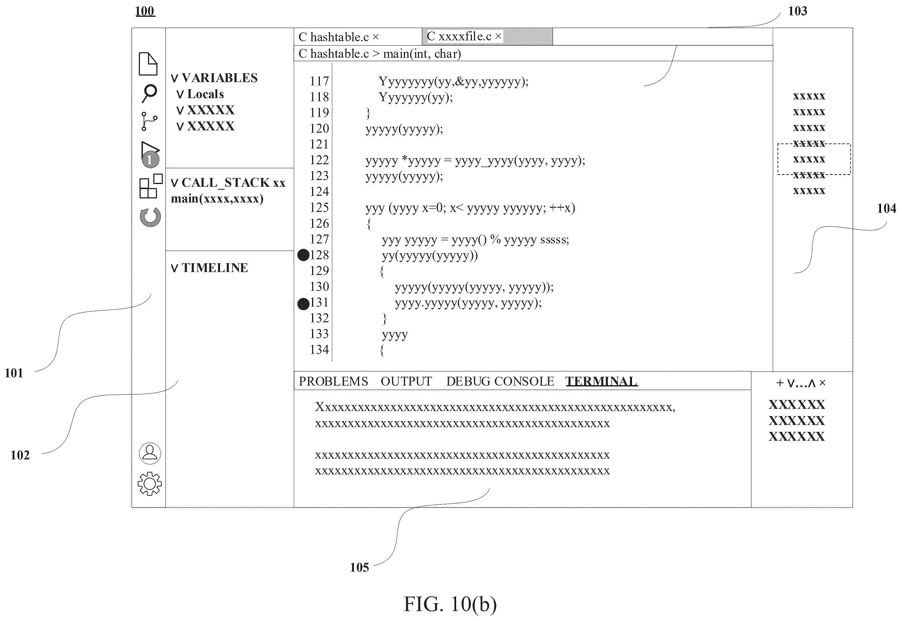

As shown in FIG. 10(a), the application interface 100 of the integrated development environment may include a plurality of functional areas such as a toolbar area 101, a debugging area 102, a code area 103, an auxiliary display area 104, and a console area 105. A developer opens, in the code area 103, two source code files (a first source code file hashtable.c and a second source code file xxxxfile.c in the figure) corresponding to a program. An execution order of the first source code file may be earlier than that of the second source code file. In addition, during debugging of the program, the first source code file may invoke the second source code file, and the first source code file is a currently displayed source code file. The developer may set keypoints for code lines 127 and 130 in code of the first source code file. As shown in FIG. 10(b), the developer may alternatively switch to the second source code file in the code area 103, and set keypoints for code lines 128 and 131 in code of the second source code file.

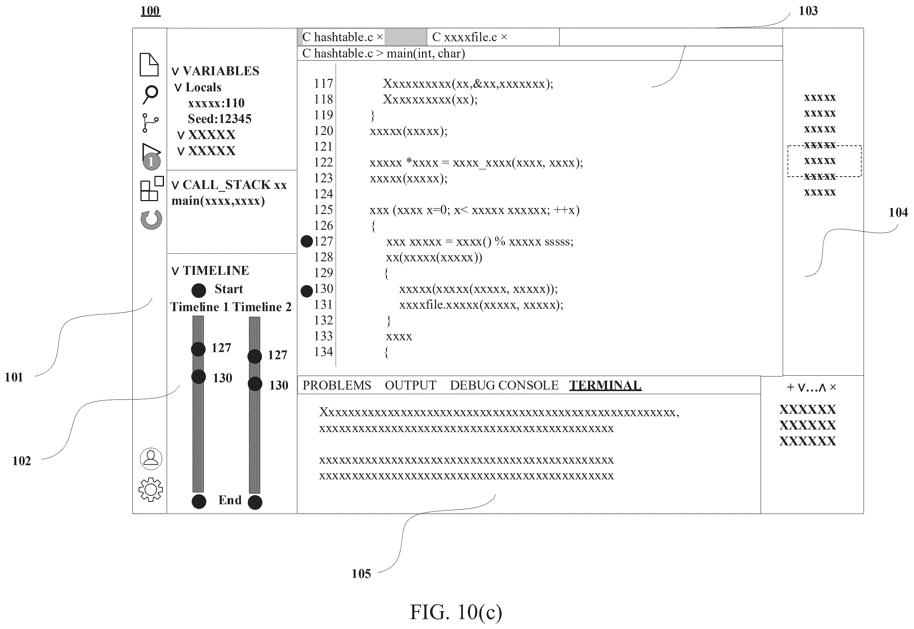

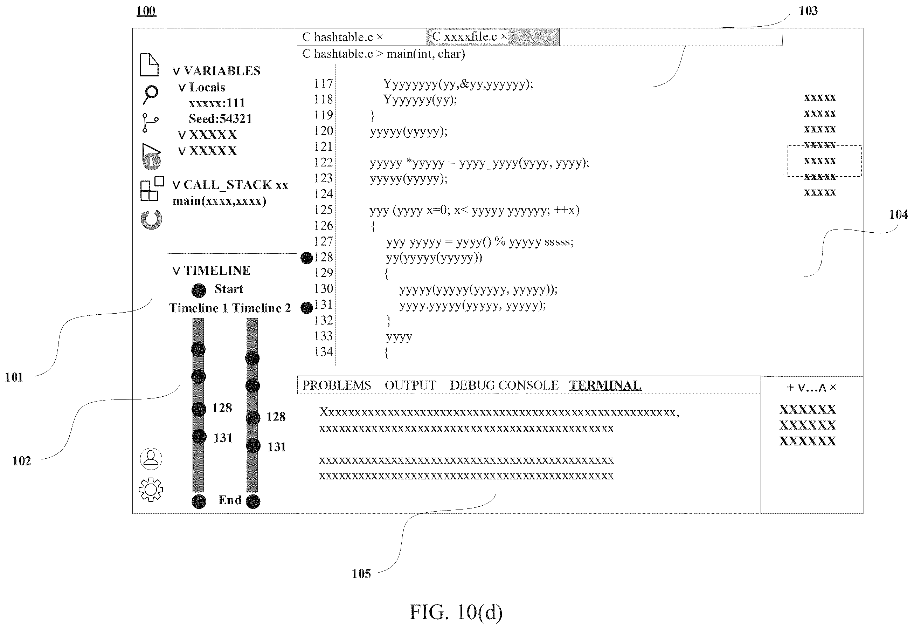

After the developer starts debugging of the program by using a debugging control ① in the toolbar area 101, as shown in FIG. 10(c), during debugging of multi-thread concurrent execution, the integrated development environment may start a first thread and a second thread. The first thread and the second thread separately debug the program to pass the code lines 127 and the code line 130 in the first source code file. The code area 103 displays the code of the first source code file. The debugging area 102 may display a timeline 1 and a timeline 2 that correspond to the first thread and the second thread. Keypoints and code line information that correspond to the code lines 127 and 130 in the first source code file are displayed on the timeline 1 and the timeline 2. As shown in FIG. 10(d), the first thread and the second thread debug the program to pass the code line 128 and the code line 131 in the second source code file. The code area 103 displays the code of the second source code file. Keypoints and code line information that correspond to the code lines 128 and 131 in the second source code file are newly displayed on the timeline 1 and the timeline 2. In this case, in some implementations, the code line information of the keypoints corresponding to the code lines 127 and 130 in the first source code file is no longer displayed on the timeline 1 and the timeline 2.

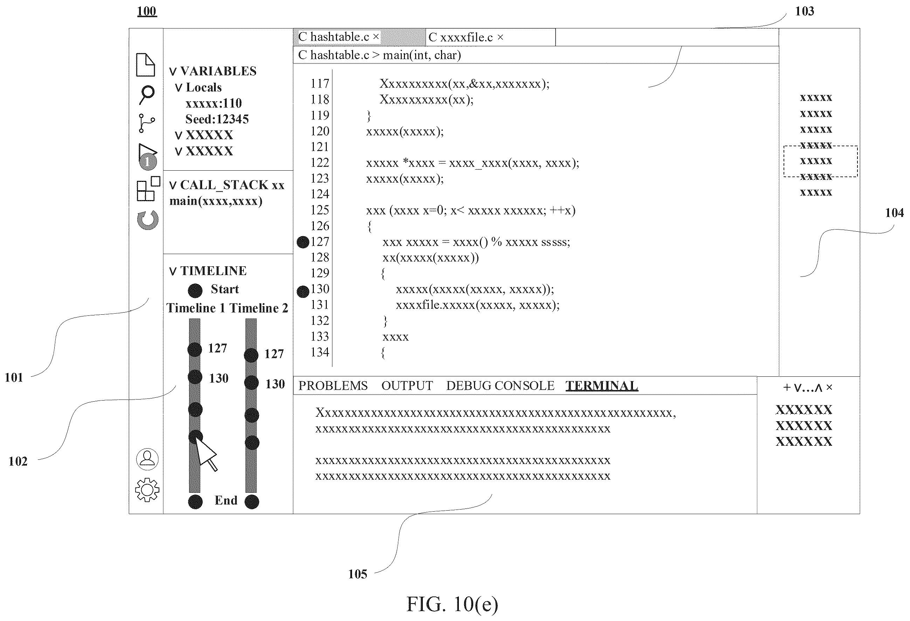

As shown in FIG. 10(e), when the developer switches from the second source code file to the first source code file in the code area 103, for example, the developer clicks/taps a file name (hashtable.c) of the first source code file displayed in the code area 103, the code line information of the keypoints corresponding to the code lines 127 and 130 in the first source code file is redisplayed on the timeline 1 and the timeline 2. In this case, the code line information of the keypoints corresponding to the code lines 128 and 131 in the second source code file may no longer be displayed on the timeline 1 and the timeline 2. In some possible implementations, if the developer clicks/taps a keypoint (for example, a keypoint that belongs to the second source code and whose line number is not displayed) on the timeline 1 in the debugging area 102, still as shown in FIG. 10(d), the code area 103 of the integrated development environment switches to the code of the second source code file. In addition, the code line of the keypoints corresponding to the code lines 128 and 131 in the second source code file is redisplayed on the timeline 1 and the timeline 2, and the code line information of the keypoints corresponding to the code lines 127 and 130 in the first source code file is not displayed.

It can be learned that, in the application scenario, described in FIG. 10(a) to FIG. 10(e), of the integrated development environment to which the program debugging method is applicable, when a target program or a to-be-debugged program relates to a plurality of source code files and the target program relates to multi-thread concurrent execution, only code line information of a keypoint that is set in a source code file currently displayed in the integrated development environment may be displayed on a timeline corresponding to each thread, and code line information of a keypoint that is set in a non-currently-displayed source code file is not displayed. In this way, the developer can quickly locate an exception or a problem in code during debugging.

The method in embodiments of this application is described above in detail. To better implement the foregoing solutions in embodiments of this application, correspondingly, the following further provides a related device for collaboratively implementing the foregoing solutions.

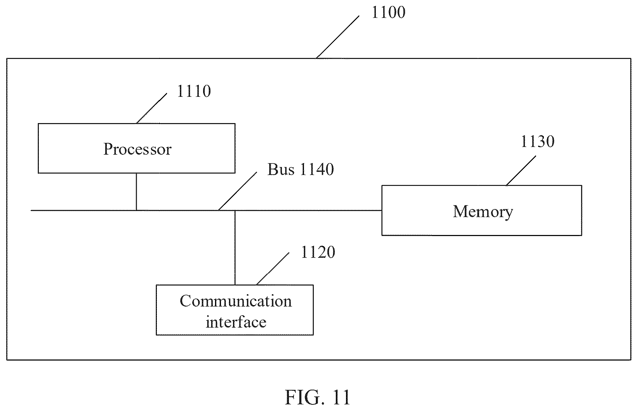

FIG. 11 is a diagram of a structure of an electronic device 1100 for running an integrated development environment according to this application. As shown in FIG. 11, the electronic device 1100 includes a processor 1110, a communication interface 1120, and a memory 1130. The processor 1110, the communication interface 1120, and the memory 1130 may be connected to each other through an internal bus 1140, or may communicate with each other through another means, for example, wireless transmission. In this embodiment of this application, for example, the bus 1140 is used for connection. The bus 1140 may be a peripheral component interconnect express (peripheral component interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 1040 may be classified into an address bus, a data bus, a control bus, and the like. In addition to a data bus, the bus 1140 may further include a power bus, a control bus, a status signal bus, and the like. However, for clarity of description, various buses are marked as the bus 1140 in the figure.

The processor 1110 may include at least one general-purpose processor, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 1010 executes various types of digital storage instructions, for example, digital storage instructions stored in software or a firmware program in the memory 1130, to enable the electronic device 1100 to provide a plurality of services.

The memory 1030 is configured to store program code, and the processor 1110 controls execution of the program code, to perform the processing steps of the occlusion recognition method in the foregoing embodiments. The program code may include one or more software modules. The one or more software modules may be software modules provided in the embodiment of FIG. 8, for example, an obtaining unit, a generation unit, and a determining unit. The obtaining unit is configured to obtain power of a plurality of APs, signal strength between a terminal and the plurality of APs, and signal strength between a plurality of AP pairs. The generation unit is configured to generate a path loss value pair between the terminal and an AP pair and a path loss value of the AP pair based on the power of the plurality of APs, the signal strength between the terminal and the plurality of APs, and the signal strength between the plurality of AP pairs that are obtained. The determining unit is configured to compare a first path loss value between a first AP and a second AP with a second path loss value, to determine whether an obstacle exists between the first AP and the second AP. The first path loss value is a signal loss measured between the first AP and the second AP, and the second path loss value is a path loss value obtained through inference based on a path loss value pair between the terminal and each of the plurality of AP pairs.

The memory 1130 may include a volatile memory (volatile memory), for example, a random access memory (random access memory, RAM). The memory 1030 may alternatively include a non-volatile memory (non-volatile memory, NVM), for example, a read-only memory (read-only memory, ROM), a flash memory (flash memory), a hard disk drive (hard disk drive, HDD), or a solid-state drive (solid-state drive, SSD). The memory 1130 may alternatively include a combination of the foregoing types. The memory 1130 may store program code, to specifically perform step S510 to step S530 in the embodiment of FIG. 5 and optional steps thereof. Details are not described herein again.

The communication interface 1120 may be an internal interface (for example, a highspeed serial computer extension bus), a wired interface (for example, an Ethernet interface), or a wireless interface (for example, a cellular network interface or a wireless local area network interface), and is configured to communicate with another device or module.

It should be noted that FIG. 11 is merely a possible implementation of this embodiment of this application. During actual application, the electronic device 1100 may alternatively include more or fewer components. This is not limited herein.

It should be noted that this embodiment may be implemented by a general-purpose physical server, for example, an ARM server or an X86 server, or may be implemented by a virtual machine that is implemented based on a general-purpose physical server in combination with an NFV technology. The virtual machine is a software-stimulated complete computer system that has a function of a complete hardware system and that runs in a fully isolated environment. This is not specifically limited in this application.

The electronic device 1100 shown in FIG. 11 may alternatively be a computer cluster including at least one server. This is not specifically limited in this application.

An embodiment of this application further provides a computer-readable storage medium. The computer-readable storage medium stores instructions. When the instructions are run on a processor, the method process shown in FIG. 5 is implemented.

It can be understood that the structure shown in this embodiment of this application does not constitute a specific limitation on the electronic device. In embodiments of this application, the electronic device (for example, a mobile phone or a vehicle head unit) may include more or fewer components than those shown in the figure, or some components may be combined, or some components may be split, or the components may be arranged differently. The components shown in the figure may be implemented by hardware, software, or a combination of software and hardware.

All or some of embodiments of this application may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art can understand that all or some of the processes in embodiments of this application may be implemented by a computer program instructing related hardware. The program may be stored in a computer-readable storage medium. When the program is executed, the processes in embodiments of this application may be included. The storage medium includes any medium that can store program code, for example, a read-only memory (read-only memory, ROM), a random access memory (random access memory, RAM), a magnetic disk, or a compact disc.

It should be understood that, although the terms "first", "second", and the like may be used in this specification to describe various features, the features should not be limited by the terms. The terms are merely used for distinguishing, and shall not be understood as an indication or implication of relative importance. For example, without departing from the scope of embodiments of this application, a first feature may be referred to as a second feature, and similarly, a second feature may be referred to as a first feature.

In addition, various operations are described as a plurality of separate operations in a manner that is most conducive to understanding embodiments of this application. However, a described order should not be construed as implying that the operations need to depend on the described order. A plurality of operations may be performed in parallel, concurrently, or simultaneously. In addition, the order of the operations may alternatively be rearranged. The processing may be terminated when the described operations are completed, but may alternatively include additional operations that are not included in the figures. The processing may correspond to a method, a function, a procedure, a subroutine, a subprogram, or the like.

Unless otherwise specified, the terms "comprise", "have", and "include" are synonymous. The phrase "A/B" indicates "A or B". The phrase "A and/or B" indicates "(A), (B), or (A and B)".

As used in this specification, the term "module" may mean being a part thereof, or include a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another proper component that provides the function.

In the accompanying drawings, some structural or method features may be shown in a specific arrangement and/or order. However, it should be understood that the specific arrangement and/or order are/is not required. In embodiments of this application, the features may be described in a manner and/or order different from that shown in the illustrative accompanying drawings. In addition, structural or method features included in a specific accompanying drawing do not mean that all embodiments need to include the features. In embodiments of this application, the features may not be included, or the features may be combined with other features.

The foregoing describes embodiments of this application in detail with reference to the accompanying drawings. However, use of the technical solutions of this application is not limited to the variety of application mentioned in embodiments of this application, and various structures and variations may be easily implemented with reference to the technical solutions of this application, to achieve various beneficial effects mentioned in this specification. Without departing from the purpose of this application, any variation made within the scope of knowledge possessed by a person of ordinary skill in the art shall fall within the scope of this application.

## Claims

1. A program debugging method, applied to an integrated development environment, wherein the method comprises:
in response to a first debugging operation for a target program, debugging the target program to pass a first target code position in a first code file corresponding to the target program; and
displaying at least a first timeline and a second timeline that correspond to the first target code position, wherein the first timeline corresponds to a first thread that runs the target program, and the second timeline corresponds to a second thread that runs the target program.

2. The method according to claim 1, wherein the first timeline comprises at least one first breakpoint and first code line information corresponding to the first breakpoint, the second timeline comprises at least one second breakpoint and second code line information corresponding to the second breakpoint, and the first breakpoint and the second breakpoint correspond to code positions before the first target code position in the first code file.

3. The method according to claim 2, wherein the first breakpoint and the second breakpoint correspond to a same code line in the first code file, and the first code line information is the same as the second code line information.

4. The method according to claim 3, wherein
the first breakpoint corresponds to first hit time information, and the first hit time information indicates time at which the first thread runs the target program to pass the first breakpoint; and
the second breakpoint corresponds to second hit time information, and the second hit time information indicates time at which the second thread runs the target program to pass the second breakpoint.

5. The method according to claim 4, wherein the first timeline is parallel to the second timeline;
a straight line that passes through a starting position of the first timeline and a starting position of the second timeline is perpendicular to the first timeline and is perpendicular to the second timeline; and
when the first hit time information is different from the second hit time information, a straight line that passes through the first breakpoint and the second breakpoint is not parallel to the straight line that passes through the starting position of the first timeline and the starting position of the second timeline.

6. The method according to any one of claims 1 to 5, wherein
the first timeline comprises first thread identification information, and the first thread identification information corresponds to the first thread; and
the second timeline comprises second thread identification information, and the second thread identification information corresponds to the second thread.

7. The method according to any one of claims 1 to 6, wherein when the target program is debugged to pass the first target code position in the first code file corresponding to the target program, a code area of the integrated development environment switches to displaying the first code file.

8. The method according to any one of claims 1 to 6, further comprising:
debugging the target program to pass a second target code position in the first code file corresponding to the target program; and
displaying, on the first timeline, a third breakpoint and third code line information corresponding to the third breakpoint, wherein the third breakpoint corresponds to the second target code position.

9. The method according to claim 8, wherein the third breakpoint corresponds to third hit time information, and the third hit time information indicates time at which the first thread runs the target program to pass the third breakpoint; and
when the first hit time information is different from the third hit time information, a position of the third breakpoint on the first timeline is different from a position of the first breakpoint on the first timeline.

10. The method according to any one of claims 1 to 9, further comprising:
in response to a second debugging operation for the target program, debugging the target program to switch from the first code file to a second code file corresponding to the target program and pass a third target code position in the second code file; and
displaying, on the first timeline, at least one fourth breakpoint and fourth code line information corresponding to the fourth breakpoint, and displaying, on the second timeline, at least one fifth breakpoint and fifth code line information corresponding to the fifth breakpoint, wherein the fourth breakpoint and the fifth breakpoint correspond to code positions before the third target code position in the second code file.

11. The method according to claim 10, wherein the first code line information is hidden on the first timeline, and the second code line information is hidden on the second timeline.

12. The method according to claim 10 or 11, wherein when the target program is debugged to pass the third target code position in the second code file, the code area of the integrated development environment switches to displaying the second code file.

13. The method according to any one of claims 10 to 12, further comprising:
in response to a backtrace operation for the first breakpoint, switching, by the code area of the integrated development environment, to displaying the first code file and displaying, in a highlighted display manner, code of the first code line information in the first code file.

14. The method according to any one of claims 10 to 12, further comprising:
in response to a backtrace operation for the first breakpoint, displaying, by a debugging area of the integrated development environment, first debugging information corresponding to the first breakpoint, wherein the first debugging information comprises at least one of the following: a variable value of a first to-be-observed variable, the first thread identification information, the first hit time information, and the first code line information.

15. The method according to claim 11, wherein on the first timeline, the first code line information is displayed, and the fourth code line information is hidden; and on the second timeline, the second code line information is displayed, and the fifth code line information is hidden.

16. A program debugging apparatus, used in an integrated development environment, wherein
in response to a first debugging operation for a target program, debugging, by the program debugging apparatus, the target program to pass a first target code position in a first code file corresponding to the target program; and
displaying, by the program debugging apparatus in a debugging area of the integrated development environment, at least a first timeline and a second timeline that correspond to the first target code position, wherein the first timeline corresponds to a first thread that runs the target program, and the second timeline corresponds to a second thread that runs the target program.

17. A program development product, comprising a debugger and an integrated development environment, wherein
in response to a first debugging operation for a target program, the debugger debugs the target program to pass a first target code position in a first code file corresponding to the target program; and
a debugging area of the integrated development environment displays at least a first timeline and a second timeline that correspond to the first target code position, wherein the first timeline corresponds to a first thread that runs the target program, and the second timeline corresponds to a second thread that runs the target program.

18. An electronic device, comprising: a memory, configured to store a program; and a processor, configured to execute the program stored in the memory, wherein when the program stored in the memory is executed, the processor is configured to implement the method according to any one of claims 1 to 15.
